# EUROPEAN PATENT SPECIFICATION

(11) **EP 4 179 454 B1**
(45) Date of publication and mention of the grant of the patent: **01.01.2025**
(21) Application number: 20949749.4
(22) Date of filing: 18.08.2020
(51) Int. Cl.: G06K 7/00, H04B 5/00, H05B 47/19, G06F 8/656, G06K 7/10

(54) **DATA CALIBRATION METHOD AND DRIVER**
DATENKALIBRIERUNGSVERFAHREN UND TREIBER
PROCÉDÉ D'ÉTALONNAGE DE DONNÉES ET PILOTE

(43) Date of publication of application: 17.05.2023
(73) Proprietor: Tridonic GmbH & Co KG, 6851 Dornbirn (AT)
(72) Inventor: LIU, Xiaofei, Shenzhen, Guangdong 518131 (CN); WANG, Shuanghong, Shenzhen, Guangdong 518131 (CN); YANG, Jiaqi, Shenzhen, Guangdong 518131 (CN); DAI, Xuewei, Shenzhen, Guangdong 518131 (CN)
(74) Representative: Rupp, Christian
(86) International application number: PCT/CN2020/109709
(87) International publication number: WO 2022/036537

(56) References cited:
- EP-A1- 3 614 570
- EP-A2- 1 825 806
- CN-A- 101 089 872
- CN-A- 101 727 601
- CN-A- 105 228 786
- US-A1- 2017 238 397

## Description

### Technical Field

Embodiments of the present disclosure generally relate to the field of driver, and more particularly, to a data calibration method and a driver.

### Background

This section introduces aspects that may facilitate better understanding of the present disclosure. Accordingly, the statements of this section are to be read in this light and are not to be understood as admissions about what is in the related art or what is not in the related art.

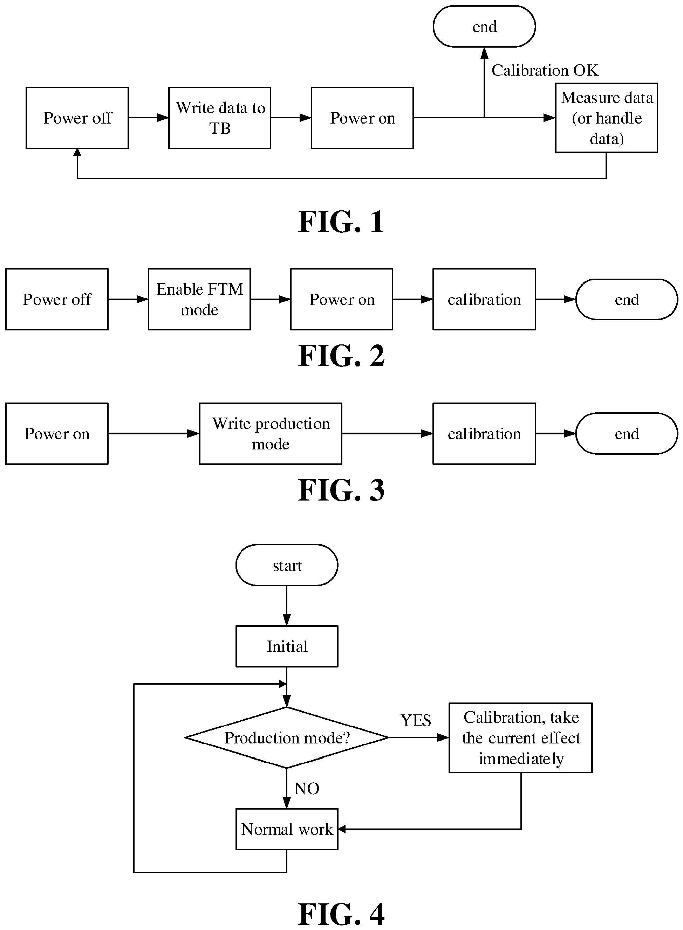

In the field of data calibration, one solution is that data is written to transfer buffer (TB) during power-off, and the data will only take effect after power-up, thus it may need many times power off/on during calibration. Figure 1 shows an operation process of this solution. Figure 2 shows an operation process of another solution, in figure 2, factory test mode (FTM) is used, in this solution, the operation is more complicated, and much memory size is needed to implement this solution.

US 2017/238397 A1 discloses a lighting unit having a micro-controller, an embedded NFC chip, a power supply and an lighting element. The embedded NFC circuit has a memory shared between the micro-controller and an NFC tool such as an NFC tag 202 or an external NFC reader/writer. The micro-controller can store operational data such as faults in the shared memory and the NFC tool can read out the operational data and if necessary write new parameter data to the memory.

### Summary

Inventors of this disclosure found that, in the related art, calibration data can be written to Near Field Communication (NFC) tag offline, and the data will only take effect after power cycle. However, it may need many times power cycle if multi-parameters are to be calibrated. On the other hand, calibration data can be written to NFC tag when driver is powered off, and the data will only take effect after next power cycle. Thus it may need many times power cycle if multi-parameters are to be calibrated.

In general, embodiments of the present disclosure provide a data calibration method and a driver. In the embodiments, the calibration data are written to NFC tag any time when driver is powered on, the data take effect immediately after calibration, and there is no need to power cycle the driver to make the data take effect.

In a first aspect, there is provided a data calibration method for calibrating an LED driver by a NFC reader, as defined by claim 1.

In another embodiment, the NFC reader is a NFC application configured in an electronic device.

In another embodiment, the NFC tag is configured in the LED driver, and a transfer buffer of the NFC tag contains three fields, which are status field, data field, and CRC field.

In another embodiment, the data calibration method further includes:

informing a process result after processing the feedback.

In a second aspect, there is provided a data calibration method for calibrating an LED driver, as defined by claim 5.

In another embodiment, a transfer buffer of the NFC tag contains three fields, which are status field, data field, and CRC field.

In a third aspect, there is provided an electronic device as defined by claim 7.

In a fourth aspect, there is provided an LED driver as defined by claim 8.

According to at least one of the various embodiments of the present disclosure, there is no need to power cycle the driver, and it can be much faster if more parameters are to be calibrated, especially for those which need to calibrate step by step. Therefore, the production efficiency is improved.

According to at least one of the various embodiments of the present disclosure, command is simpler than before, operations are easier, and there is no need to power on/off repeatedly. When the present disclosure is used for calibration of current for production, calibration time during production is saved, and production efficiency is improved. Furthermore, compared with FTM, the code size is reduced, and the memory size is saved. And the present disclosure is easy to implement for software.

### Brief Description of the Drawings

The above and other aspects, features, and benefits of various embodiments of the disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a schematic diagram of a solution of data calibration process in the related art;
Fig. 2 is a schematic diagram of another solution of data calibration process in the related art;
Fig. 3 is a schematic diagram of a data calibration process of the present disclosure;
Fig. 4 is a flowchart of the data calibration process of the present disclosure;
Fig. 5 is a schematic diagram of a data calibration method of the present disclosure;
Fig. 6 is a schematic diagram of the transfer buffer of the NFC tag;
Fig. 7 is a schematic diagram of another data calibration method of the present disclosure;
Fig. 8 is a schematic diagram of information interaction between a NFC reader and a MCU;
Fig. 9 is a flowchart of a process of the NFC reader;
Fig. 10 is a flowchart of a process of the MCU;
Fig. 11 is a function block diagram of a device configured with the NFC reader;
Fig. 12 is a function block diagram of a driver configured with the MCU and the NFC tag.

### Detailed Description

The present disclosure will now be discussed with reference to several example embodiments. It should be understood that these embodiments are discussed only for the purpose of enabling those skilled persons in the art to better understand and thus implement the present disclosure, rather than suggesting any limitations on the scope of the present disclosure.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

### First aspect of embodiments

A data calibration method is provided in the first aspect of embodiments.

Fig. 3 is a schematic diagram of a data calibration process of the present disclosure, Fig. 4 is a flowchart of the data calibration process of the present disclosure. As shown in Figs. 3 and 4, when the driver is powered on, initial processing is performed, and in the production mode, the calibration data may be written to NFC tag for calibration, thus the calibrated current changes immediately, and there is no need to power on/off the driver to calibrate.

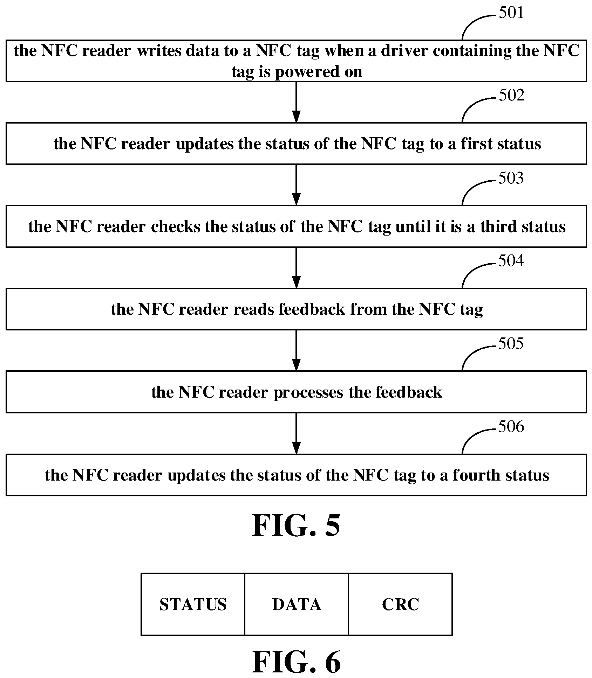

Fig. 5 is a schematic diagram of a data calibration method of an embodiment of the present disclosure.

In this embodiment, the data calibration method is applied to a NFC reader, and the NFC reader may be a single device or may a NFC application (program) stored in a memory of an electronic device, this embodiment is not limited thereto.

As shown in Fig. 5, the data calibration method includes:
501: the NFC reader writes data to a NFC tag when a driver containing the NFC tag is powered on;
502: the NFC reader updates the status of the NFC tag to a first status;
503: the NFC reader checks the status of the NFC tag until it is a third status;
504: the NFC reader reads feedback from the NFC tag;
505: the NFC reader processes the feedback; and
506: the NFC reader updates the status of the NFC tag to a fourth status.

According to the embodiment of the present disclosure, an operator can write calibration data to NFC tag any time when driver is powered on. Microcontroller Unit (MCU) of the driver may real-time check the current change immediately, thus power cycle is not needed to make is take effect.

In an embodiment, the NFC tag is configured in the driver, and a transfer buffer of the NFC tag contains three fields, which are status field, data field, and a Cyclic Redundancy Check (CRC) field, in which, the status field occupies one or more bytes to indicate the communication status of the NFC tag. Fig. 6 is a schematic diagram of the transfer buffer of the NFC tag, shows the three fields of the NFC tag, the embodiment is not limited thereto, the transfer buffer of the NFC tag may include more fields or may include only the status field and the data field, that is, the CRC field is optional. As shown in Fig. 6, the CRC is used to check whether the data in the NFC tag is correct or not, with the CRC checksum, Radio Frequency (RF) disturbance during transmission may be reduced.

In an embodiment, the status of the NFC tag is preferred to have no less than 5 states, which is idle, busy, ready, done, and error.

In an embodiment, "ready status" refers to that the NFC tag is prepared to do some reading/writing events. When the status of the NFC tag is ready, the MCU may update the status to a second status and read data from the NFC tag. In this embodiment, the ready state is referred to as a first status.

In an embodiment, "busy status" refers to that the NFC tag is doing some reading/writing events. In this embodiment, the busy state is referred to as a second status.

In an embodiment, "done status" refers to that the NFC tag has finished the data processing and the result is correct, "error status" refers to that the NFC tag has finished the data processing but the result is incorrect. In this embodiment, the done status or the error status is referred to as a third status.

In an embodiment, "idle status" refers to that the NFC tag is starting up and waiting to do save events. In idle status, calibration process of this time has been finished, the current takes effect immediately, and the process goes to the normal work mode.

In operation 501, at the beginning of the calibration process, the NFC reader writes data to the NFC tag when the driver is powered on. The data may be various parameters related to calibration, thus by only one step, calibration speed are fasted when more parameters are to be calibrated, the production efficiency is improved.

In operation 502, after writing data to NFC tag, the NFC reader updates the status of the NFC tag to the first status, such as ready status, thus, the MCU may read data from the NFC tag.

In operation 503, the NFC reader keeps checking the status of the NFC tag until it is the third status, that is done status or error status, thus, the NFC reader may perform the subsequent processing. In operation 503, in an embodiment, the NFC reader reads the status byte in the NFC tag and judges whether the status is done or error, when it is judged YES, the NFC reader deems that the status of the NFC tag is the third status and the process goes to operation 504; and when it is judged NO, the NFC reader deems that the status of the NFC tag is not the third status and it continues to read the status byte in the NFC tag and judge the status of the NFC tag.

In operations 504 and 505, when the status of the NFC tag is done or error, the NFC reads feedback from the NFC tag and process the feedback. The feedback is in the data field of the NFC tag and which is written by the MCU of the driver.

In operation 505, since the status of the NFC tag is done or error, the feedback corresponding to different status are different, the NFC reader processes the feedback corresponding to different status, a particular processing method is not limited in the present disclosure, which is omitted here.

In operation 506, after or before the NFC reader processes the feedback, the NFC reader updates the status of the NFC tag to a fourth status, that is the idle status, thus this time of calibration process is finished.

In an embodiment, the NFC reader may also inform a process result to a processing entity after processing the feedback, which is not limited in the present disclosure.

In the embodiment of the present application, the execution order of the operations of the method of FIG. 5 is not limited, for example, the execution order of operations 501 and 502 may be interchanged, and in FIG. 5, some operations may be added or some operations may be reduced, it depends on the implementation.

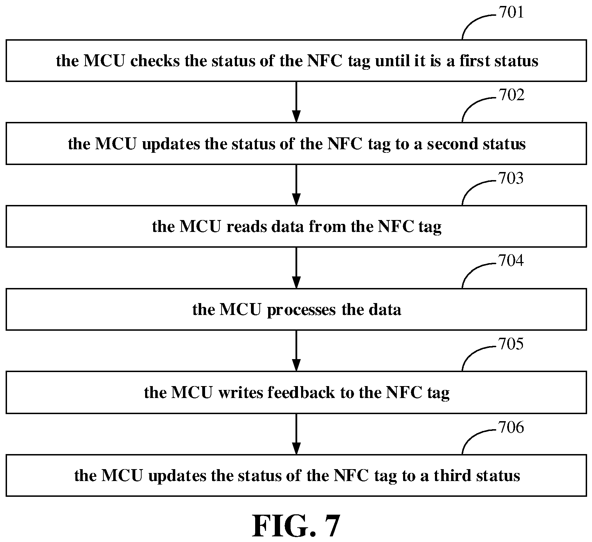

Fig. 7 is a schematic diagram of a data calibration method of another embodiment of the present disclosure.

In this embodiment, the data calibration method is applied to a MCU of the driver, the driver also includes the above NFC tag, the NFC tag may be a chip connected to the MCU or a memory coupled to the MCU, this embodiment is not limited thereto. In this embodiment, the above description for the NFC tag is incorporated herein, which is omitted herein. In this embodiment, the driver may be used in a power supply for production, and this embodiment is not limited thereto.

As shown in Fig. 7, the data calibration method includes:
701: the MCU checks the status of the NFC tag until it is a first status;
702: the MCU updates the status of the NFC tag to a second status;
703: the MCU reads data from the NFC tag;
704: the MCU processes the data;
705: the MCU writes feedback to the NFC tag; and
706: the MCU updates the status of the NFC tag to a third status.

According to the embodiment of the present disclosure, an operator can write calibration data to NFC tag any time when driver is powered on. Microcontroller Unit (MCU) of the driver may real-time check the current change immediately, thus power cycle is not needed to make is take effect.

In operation 701, the MCU keeps checking the status of the NFC tag, when the status of the NFC tag is the first status, that is the ready status, the process goes to operation 702. In operation 701, similar as operation 503, the MCU may read the status byte in the NFC tag and judge whether the status is ready, when it is judged YES, the MCU deems that the status of the NFC tag is the first status and the process goes to operation 702; and when it is judged NO, the MCU deems that the status of the NFC tag is not the first status and it continues to read the status byte in the NFC tag and judge the status of the NFC tag.

In operations 702 and 703, when the status of the NFC tag is the first status, the MCU deems that the calibration process is ready, it updates the status of the NFC tag to the second status, that is the busy status, and begins to read data from the NFC tag. The data is stored in the DATA field of the transfer buffer of the NFC tag, which has been described above, which is omitted here.

In operations 704 and 705, the MCU processes the data and writes feedback to the NFC tag based on the processing result. a particular processing method is not limited in the present disclosure, which is omitted here.

In operation 706, the MCU updates the status of the NFC tag to the third status, such as done status or error status, which depends on the processing result and is omitted here.

In the embodiment of the present application, the execution order of the operations of the method of FIG. 7 is not limited, for example, the execution order of operations 705 and 706 may be interchanged, and in FIG. 7, some operations may be added or some operations may be reduced, it depends on the implementation.

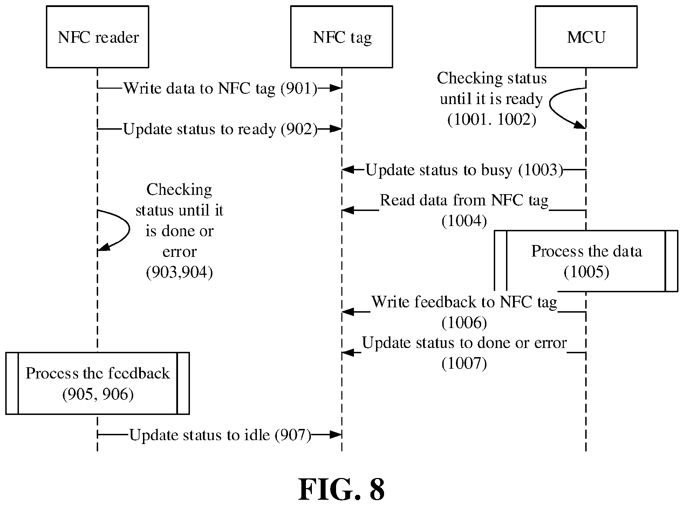

In order to make the method of the embodiment of the present disclosure more clear and understandable, the method of the embodiment of the present disclosure will be described below with reference to the Figs. 8, 9 and 10. In the following description, the first state is ready status, the second state is busy status, the third state is done or error status, and the fourth state is idle status is taken as an example.

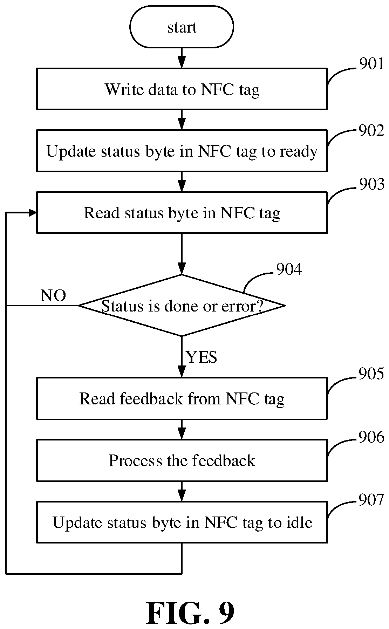

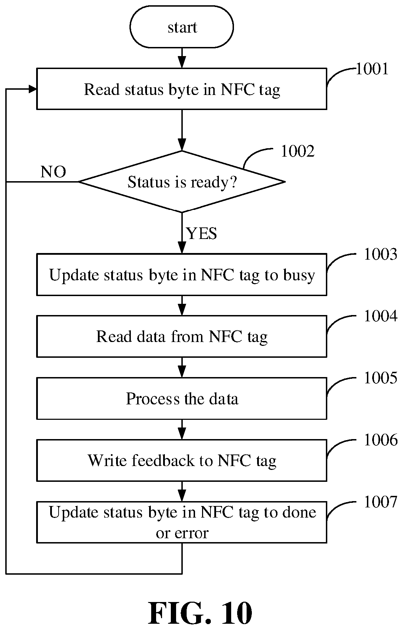

Fig. 8 is a schematic diagram of information interaction between a NFC reader and a MCU, Fig. 9 is a flowchart of a process of the NFC reader, and Fig. 10 is a flowchart of a process of the MCU.

As shown in Figs. 8, 9 and 10, the NFC reader writes data to NFC tag (901) and updates the status byte in NFC tag to READY (902). The MCU reads the status byte in the NFC tag (1001) and checks whether the status is ready (1002), when it is judged YES by the MCU, it updates the status byte in NFC tag to BUSY (1003), reads data from the NFC tag (1004), processes the data (1005), and writes feedback to the NFC tag (1006). The NFC reader reads the status byte in the NFC tag (903) and checks whether the status is DONE or ERROR (904), when it is judged YES by the NFC reader, it reads feedback from the NFC tag (905), processes the feedback (906) and updates the status byte in the NFC tag to IDLE (907).

According to at least one of the various embodiments of the present disclosure, there is no need to power cycle the driver, and it can be much faster if more parameters are to be calibrated, especially for those which need to calibrate step by step. Therefore, the production efficiency is improved.

According to at least one of the various embodiments of the present disclosure, command is simpler than before, operations are easier, and there is no need to power on/off repeatedly. When the present disclosure is used for calibration of current for production, calibration time during production is saved, and production efficiency is improved. Furthermore, compared with FTM, the code size is reduced, and the memory size is saved. And the present disclosure is easy to implement for software.

### Second aspect of embodiments

An electronic device is provided in the second aspect of embodiments. The electronic device may be a mobile phone, a tablet PC, a portable digital camera, a media player, a portable game device, a PDA, a computer, or the like, and this embodiment is not limited thereto.

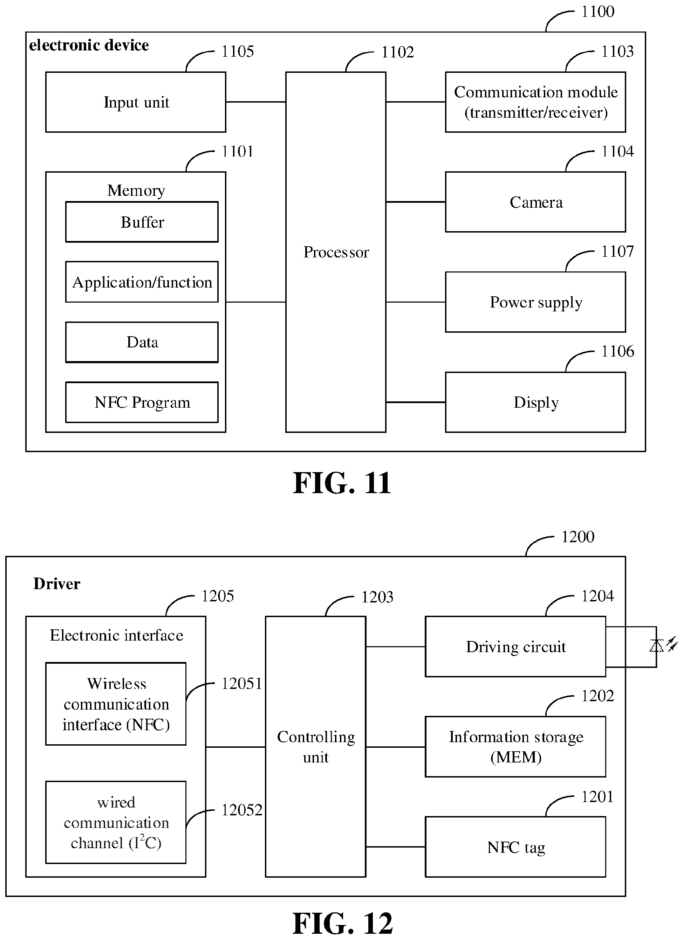

Fig. 11 is a function block diagram of the electronic device, as shown in Fig. 11, the electronic device 1100 includes a memory 1101 and a processor 1102, the memory 1101 stores a NFC program, the processor 1102 couples to the memory and is configured to execute the NFC program to:
write data to a NFC tag when a driver is powered on;
update status of the NFC tag to a first status;
check status of the NFC tag until it is a third status;
read feedback from the NFC tag;
process the feedback; and
update status of the NFC tag to a fourth status.

In the embodiment, the above processing of the processor 1102 is same as that of the NFC reader in Fig. 5, the above description for Fig. 5 is incorporated in the embodiment, which is omitted here.

As shown in Fig. 11, the electronic device 1100 may further include a communication module (communication interface) 1103, a camera 1104, an input unit 1105, a display 1106 and a power supply 1107, which being connected to the processor 1102 and functioning under control of the processor 1102. The communication module 1103 may function as a receiver to receive data from external device, such as the driver, or, the communication module 1103 may function as a transmitter to send data to the external device. The camera 1104 may be any type of cameras. The input unit 1105 may be a keyboard or a mouse or the like.

It should be noted that FIG. 11 may only illustrate a part of the structure of the electronic device 1100. The electronic device 1100 does not necessarily include all the components shown in FIG. 11. And furthermore, the electronic device 1100 may include components not shown in FIG. 11, and the related art may be referred to. It should be noted that this figure is illustrative only, and other types of structures may also be used, so as to supplement or replace this structure and achieve a telecommunications function or other functions.

As can be seen from the above mentioned embodiments, an operator can write calibration data to NFC tag any time when driver is powered on. Microcontroller Unit (MCU) of the driver may real-time check the current change immediately, thus power cycle is not needed to make is take effect.

### Third aspect of embodiments

A driver is provided in the third aspect of embodiments.

Fig. 12 is a function block diagram of the driver, as shown in Fig. 11, the driver 1200 includes a NFC tag 1201, a memory 1202 and a processor 1203, the memory 1202 stores a plurality of instructions and functions as an information storage, the processor 1203 couples to the memory 1202, functions as a controlling unit and is configured to execute the plurality of instructions to:
check status of the NFC tag 1201 until it is a first status;
update status of the NFC tag 1201 to a second status;
read data from the NFC tag1201;
process the data;
write feedback to the NFC tag 1201; and
update status of the NFC tag 1201 to a third status.

In the embodiment, the above processing of the processor 1203 is same as that of the MCU in Fig. 7, the above description for Fig. 7 is incorporated in the embodiment, which is omitted here.

As shown in Fig. 12, in some embodiments, the driver 1200 further includes a driving circuit 1204, which is controlled via the controlling unit 1203 to commission external device, such as a lighting system (LED). To control the driving circuit 1204, the information storage 1202 is used to store configuration information.

As shown in Fig. 12, in some embodiments, the driver 1200 further includes an electronic interface (such as a communication interface) 1205, which is configured to retrieve configuration information from a configuring device.

In some embodiments, as shown in Fig. 12, the electronic interface 1205 includes a wireless communication interface 12051, which is used to receive the configuration information sent from the configuring device. The wireless communication interface 12051 may include a storage unit, e.g. EEPROM or FLASH memory, to store the received configuration information.

In some embodiments, as shown in Fig. 12, the electronic interface 1205 includes a wired communication channel 12052, which might be an l²C-interface or SPI-interface. The wired communication channel 12052 is used to provide the received configuration information to the information storage 1202 of the driver 1200.

In some embodiments, the wired communication channel 12052 is preferably used to provide the received configuration information to the controlling unit 1203 of the driver 1200 in an operation mode of the driver 1200. Preferably the electronic interface 1205 may read out the configuration information stored in the storage unit of the wireless communication interface 12051 through the wired communication channel 12052 when the driver 1200 is powered on.

It should be noted that FIG. 12 may only illustrate a part of the structure of the driver 1200. The driver 1200 does not necessarily include all the components shown in FIG. 12. And furthermore, the driver 1200 may include components not shown in FIG. 12, and the related art may be referred to. It should be noted that this figure is illustrative only, and other types of structures may also be used, so as to supplement or replace this structure and achieve a telecommunications function or other functions.

The driver 1200 is an LED driver, and the above calibration data is the nominal LED current (programming of the nominal LED (= output) current amplitude at 100% operation) of the driver 1200. In these embodiments, after calibration, the driver 1200 can be used to program the nominal LED current of the driver 1200.

Such programming of the nominal LED current can be done during production of the driver 1200, but also during assembly of the driver 1200 into a luminaire (LED) or after installation of the luminaire (LED). For example, this function can be performed by an operator having the necessary access rights.

As can be seen from the above mentioned embodiments, an operator can write calibration data to NFC tag any time when driver is powered on. Microcontroller Unit (MCU) of the driver may real-time check the current change immediately, thus power cycle is not needed to make is take effect.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A data calibration method for calibrating an LED driver by a NFC reader, wherein the LED driver contains a NFC tag, comprising the following steps carried out by the NFC reader:
writing (501) data to the NFC tag when the LED driver is powered on, wherein the data comprises parameters related to the calibration of the LED driver;
updating (502) a status of the NFC tag to a first status, wherein the first status is a ready status;
checking (503) the status of the NFC tag until it is a third status, wherein the third status is a done or an error status;
reading (504) a feedback from the NFC tag;
processing (505) the feedback; and
updating (506) the status of the NFC tag to a fourth status, wherein the fourth status is an idle status.

2. The data calibration method according to claim 1, wherein,
the NFC reader is a NFC application configured in an electronic device.

3. The data calibration method according to claim 1, wherein, the NFC tag is configured in the LED driver, and a transfer buffer of the NFC tag contains three fields, which are status field, data field, and CRC field.

4. The data calibration method according to claim 1, wherein, the data calibration method further comprises:
informing a process result after processing the feedback.

5. A data calibration method for calibrating an LED driver, the LED driver including a NFC tag and a processor, the data calibration method comprising the following steps carried out by the processor:
checking (701) a status of the NFC tag until it is a first status, wherein the first status is a ready status;
updating (702) the status of the NFC tag to a second status, wherein the second status is a busy status;
reading (703) data from the NFC tag, wherein the data comprises parameters related to the calibration of the LED driver;
processing (704) the data;
writing (705) a feedback to the NFC tag based on the processing result; and
updating (706) status of the NFC tag to a third status, wherein the third status is a done or an error status.

6. The data calibration method according to claim 5, wherein, a transfer buffer of the NFC tag contains three fields, which are status field, data field, and CRC field.

7. An electronic device (1100), comprising:
a memory (1101) configured to store a NFC program, and
a processor (1102) coupled to the memory (1101) and configured to execute the NFC program to:
write data to a NFC tag (1201) of an LED driver (1200) when the LED driver (1200) is powered on, wherein the data comprises parameters related to a calibration of the LED driver (1200);
update a status of the NFC tag (1201) to a first status, wherein the first status is a ready status;
check the status of the NFC tag (1201) until it is a third status, wherein the third status is a done or an error status;
read a feedback from the NFC tag (1201);
process the feedback; and
update the status of the NFC tag (1201) to a fourth status, wherein the fourth status is an idle status.

8. An LED driver (1200), comprising:
a NFC tag (1201),
a memory (1202) configured to store a plurality of instructions; and
a processor (1203) coupled to the memory (1202) and configured to execute the plurality of instructions to:
check a status of the NFC tag (1201) until it is a first status, wherein the first status is a ready status;
update the status of the NFC tag (1201) to a second status, wherein the second status is a busy status;
read data from the NFC tag (1201), wherein the data comprises parameters related to a calibration of the LED driver (1200);
process the data;
write a feedback to the NFC tag (1201) based on the processing result; and
update the status of the NFC tag (1201) to a third status, wherein the third status is a done or an error status.

9. The LED driver (1200) according to claim 8, wherein the processor (1203) is further configured to program a nominal LED current of the LED driver (1200) after calibration.

## Patentansprüche

1. Datenkalibrierungsverfahren zum Kalibrieren eines LED-Treibers durch einen NFC-Leser, wobei der LED-Treiber einen NFC-Tag enthält, umfassend die folgenden Schritte, die durch den vom NFC-Leser vorgenommen werden:
Schreiben (501) von Daten auf den NFC-Tag, wenn der LED-Treiber eingeschaltet wird, wobei die Daten Parameter umfassen, die sich auf die Kalibrierung des LED-Treibers beziehen;
Aktualisieren (502) eines Status des NFC-Tags auf einen ersten Status, wobei der erste Status ein Bereitschaftsstatus ist;
Überprüfen (503) des Status des NFC-Tags, bis dieser einen dritten Status aufweist, wobei der dritte Status ein "Erledigt"- oder ein Fehlerstatus ist;
Lesen (504) einer Rückmeldung von dem NFC-Tag;
Verarbeiten (505) der Rückmeldung; und
Aktualisieren (506) des Status des NFC-Tags auf einen vierten Status, wobei der vierte Status ein Ruhestatus ist.

2. Datenkalibrierungsverfahren nach Anspruch 1, wobei der NFC-Leser eine NFC-Anwendung ist, die in einer elektronischen Vorrichtung konfiguriert ist.

3. Datenkalibrierungsverfahren nach Anspruch 1, wobei der NFC-Tag in dem LED-Treiber konfiguriert ist und ein Übertragungspuffer des NFC-Tags drei Felder enthält, die ein Statusfeld, ein Datenfeld und ein CRC-Feld sind.

4. Datenkalibrierungsverfahren nach Anspruch 1, wobei das Datenkalibrierungsverfahren ferner umfasst:
Mitteilen eines Verarbeitungsergebnisses nach dem Verarbeiten der Rückmeldung.

5. Datenkalibrierungsverfahren zum Kalibrieren eines LED-Treibers, wobei der LED-Treiber einen NFC-Tag und einen Prozessor einschließt, das Datenkalibrierungsverfahren umfassend die folgenden Schritte, die durch einen Prozessor vorgenommen werden:
Überprüfen (701) eines Status des NFC-Tags, bis dieser einen ersten Status aufweist, wobei der erste Status ein Bereitschaftsstatus ist;
Aktualisieren (702) des Status des NFC-Tags auf einen zweiten Status, wobei der zweite Status ein Besetzt-Status ist;
Lesen (703) von Daten von dem NFC-Tag, wobei die Daten Parameter umfassen, die sich auf die Kalibrierung des LED-Treibers beziehen;
Verarbeiten (704) der Daten;
Schreiben (705) einer Rückmeldung an den NFC-Tag basierend auf dem Verarbeitungsergebnis; und
Aktualisieren (706) des Status des NFC-Tags auf einen dritten Status, wobei der dritte Status ein "Erledigt"- oder ein Fehlerstatus ist.

6. Datenkalibrierungsverfahren nach Anspruch 5, wobei ein Übertragungspuffer des NFC-Tags drei Felder enthält, die ein Statusfeld, ein Datenfeld und ein CRC-Feld sind.

7. Elektronische Vorrichtung (1100), umfassend:
einen Speicher (1101), der konfiguriert ist, um ein NFC-Programm zu speichern, und
einen Prozessor (1102), der mit dem Speicher (1101) gekoppelt und zum Ausführen des NFC-Programms konfiguriert ist, zum:
Schreiben von Daten auf einen NFC-Tag (1201) eines LED-Treibers (1200), wenn der LED-Treiber (1200) eingeschaltet wird, wobei die Daten Parameter umfassen, die sich auf eine Kalibrierung des LED-Treibers (1200) beziehen;
Aktualisieren eines Status des NFC-Tags (1201) auf einen ersten Status, wobei der erste Status ein Bereitschaftsstatus ist;
Überprüfen des Status des NFC-Tags (1201), bis dieser einen dritten Status aufweist, wobei der dritte Status ein "Erledigt"- oder ein Fehlerstatus ist;
Lesen einer Rückmeldung von dem NFC-Tag (1201);
Verarbeiten der Rückmeldung; und
Aktualisieren des Status des NFC-Tags (1201) auf einen vierten Status, wobei der vierte Status ein Ruhestatus ist.

8. LED-Treiber (1200), umfassend:
einen NFC-Tag (1201),
einen Speicher (1202), der konfiguriert ist, um eine Vielzahl von Anweisungen zu speichern; und
einen Prozessor (1203), der mit dem Speicher (1202) gekoppelt und zum Ausführen der Vielzahl von Anweisungen konfiguriert ist, zum:
Überprüfen eines Status des NFC-Tags (1201), bis dieser einen ersten Status aufweist, wobei der erste Status ein Bereitschaftsstatus ist;
Aktualisieren des Status des NFC-Tags (1201) auf einen zweiten Status, wobei der zweite Status ein Besetzt-Status ist;
Lesen von Daten von dem NFC-Tag (1201), wobei die Daten Parameter umfassen, die sich auf eine Kalibrierung des LED-Treibers (1200) beziehen;
Verarbeiten der Daten;
Schreiben einer Rückmeldung an den NFC-Tag (1201) basierend auf dem Verarbeitungsergebnis; und
Aktualisieren des Status des NFC-Tags (1201) auf einen dritten Status, wobei der dritte Status ein "Erledigt"- oder ein Fehlerstatus ist.

9. LED-Treiber (1200) nach Anspruch 8, wobei der Prozessor (1203) ferner konfiguriert ist, um einen nominalen LED-Strom des LED-Treibers (1200) nach der Kalibrierung zu programmieren.

## Revendications

1. Procédé d'étalonnage de données permettant d'étalonner un pilote de DEL par un lecteur CCP, dans lequel le pilote de DEL contient une étiquette CCP, comprenant les étapes suivantes, réalisées par le lecteur CCP, consistant à :
écrire (501) des données sur l'étiquette CCP lorsque le pilote de DEL est sous tension, dans lequel les données comprennent des paramètres liés à l'étalonnage du pilote de DEL ;
mettre à jour (502) un état de l'étiquette CCP vers un premier état, dans lequel le premier état est un état prêt ;
vérifier (503) l'état de l'étiquette CCP jusqu'à ce qu'il s'agisse d'un troisième état, dans lequel le troisième état est un état terminé ou un état d'erreur ;
lire (504) un retour d'informations provenant de l'étiquette CCP ;
traiter (505) le retour d'informations ; et
mettre à jour (506) l'état de l'étiquette CCP vers un quatrième état, dans lequel le quatrième état est un état inactif.

2. Procédé d'étalonnage de données selon la revendication 1, dans lequel le lecteur CCP est une application CCP configurée dans un dispositif électronique.

3. Procédé d'étalonnage de données selon la revendication 1, dans lequel l'étiquette CCP est configurée dans le pilote de DEL, et un tampon de transfert de l'étiquette CCP contient trois champs, qui sont un champ d'état, un champ de données et un champ CRC.

4. Procédé d'étalonnage de données selon la revendication 1, dans lequel le procédé d'étalonnage de données comprend en outre :
le fait d'informer un résultat de processus après le traitement du retour d'informations.

5. Procédé d'étalonnage de données permettant d'étalonner un pilote de DEL, le pilote de DEL comportant une étiquette CCP et un processeur, le procédé d'étalonnage de données comprenant les étapes suivantes, réalisées par le processeur, consistant à :
vérifier (701) un état de l'étiquette CCP jusqu'à ce qu'il s'agisse d'un premier état, dans lequel le premier état est un état prêt ;
mettre à jour (702) l'état de l'étiquette CCP vers un deuxième état, dans lequel le deuxième état est un état occupé ;
lire (703) des données provenant de l'étiquette CCP, dans lequel les données comprennent des paramètres liés à l'étalonnage du pilote de DEL ;
traiter (704) les données ;
écrire (705) un retour d'informations sur l'étiquette CCP sur la base du résultat de traitement ; et
mettre à jour (706) l'état de l'étiquette CCP vers un troisième état, dans lequel le troisième état est un état terminé ou un état d'erreur.

6. Procédé d'étalonnage de données selon la revendication 5, dans lequel un tampon de transfert de l'étiquette CCP contient trois champs, qui sont un champ d'état, un champ de données et un champ CRC.

7. Dispositif électronique (1100), comprenant :
une mémoire (1101) configurée pour stocker un programme CCP, et
un processeur (1102) couplé à la mémoire (1101) et configuré pour exécuter le programme CCP pour :
écrire des données sur une étiquette CCP (1201) d'un pilote de DEL (1200) lorsque le pilote de DEL (1200) est sous tension, dans lequel les données comprennent des paramètres liés à un étalonnage du pilote de DEL (1200) ;
mettre à jour un état de l'étiquette CCP (1201) vers un premier état, dans lequel le premier état est un état prêt ;
vérifier l'état de l'étiquette CCP (1201) jusqu'à ce qu'il s'agisse d'un troisième état, dans lequel le troisième état est un état terminé ou un état d'erreur ;
lire un retour d'informations provenant de l'étiquette CCP (1201) ;
traiter le retour d'informations ; et
mettre à jour l'état de l'étiquette CCP (1201) vers un quatrième état, dans lequel le quatrième état est un état inactif.

8. Pilote de DEL (1200), comprenant :
une étiquette CCP (1201),
une mémoire (1202) configurée pour stocker une pluralité d'instructions ; et
un processeur (1203) couplé à la mémoire (1202) et configuré pour exécuter la pluralité d'instructions pour :
vérifier un état de l'étiquette CCP (1201) jusqu'à ce qu'il s'agisse d'un premier état, dans lequel le premier état est un état prêt ;
mettre à jour l'état de l'étiquette CCP (1201) vers un deuxième état, dans lequel le deuxième état est un état occupé ;
lire des données à partir de l'étiquette CCP (1201), dans lequel les données comprennent des paramètres liés à un étalonnage du pilote de DEL (1200) ;
traiter les données ;
écrire un retour d'informations sur l'étiquette CCP (1201) sur la base du résultat de traitement ; et
mettre à jour l'état de l'étiquette CCP (1201) vers un troisième état, dans lequel le troisième état est un état terminé ou un état d'erreur.

9. Pilote de DEL (1200) selon la revendication 8, dans lequel le processeur (1203) est en outre configuré pour programmer un courant nominal de DEL du pilote de DEL (1200) après l'étalonnage.
